# FASCICULE DE BREVET EUROPEEN

(11) **EP 1 069 493 B1**
(45) Date de publication et mention de la délivrance du brevet: **13.11.2002**
(21) Numéro de dépôt: 00410072.3
(22) Date de dépôt: 07.07.2000
(51) Int. Cl.: G06F 1/16, A45C 13/02

(54) **Housse de protection pour ordinateur portable**
Schutzbezug für tragbaren Rechner
Protective cover for portable computer

(30) Priorité: 15.07.1999 FR 9909366; 27.10.1999 FR 9913747
(43) Date de publication de la demande: 17.01.2001
(73) Titulaire: Picot, François, 74920 Combloux (FR); Truffier-Blanc, Gérald, 38660 La Terrace (FR)
(72) Inventeur: Picot, François, 74920 Combloux (FR); Truffier-Blanc, Gérald, 38660 La Terrace (FR)
(74) Mandataire: Gasquet, Denis

(56) Documents cités:
- WO-A-97/34215
- US-A- 5 002 184
- US-A- 5 242 056
- US-A- 5 632 373
- US-A- 5 725 090

## Description

La présente invention concerne une housse de protection pour ordinateur portable, destinée à protéger l'ordinateur des chocs lors de son transport et de son utilisation.

On connaît dans l'art antérieur des housses ou des étuis destinés à faciliter le transport des ordinateurs et qui se présentent sous la forme de sacs de dimensions adaptées. Certaines housses comportent des perfectionnements tels qu'un passant pour permettre à l'utilisateur de glisser son bras afin de pouvoir utiliser l'ordinateur en appui sur celui-ci.

Toutefois, malgré les efforts des constructeurs, les housses pour ordinateurs portables ne sont pas adaptées au produit et présentent de nombreux inconvénients liés à leur construction spécifique ou à leur utilisation. En effet avec les housses de protection actuellement commercialisée, pour utiliser l'ordinateur, il est nécessaire de le sortir de sa housse, ce qui bien entendu est un inconvénient majeur.

Le principal inconvénient des housses disponibles actuellement sur le marché réside dans leur incapacité à protéger de manière sérieuse l'ordinateur portable contre des chocs. Les matériaux choisis pour réaliser les housses et leurs configurations ou leurs agencements respectifs empêchent l'obtention d'une protection efficace nécessaire au transport et à l'utilisation d'appareils aussi sensibles et fragiles que les ordinateurs portables.

On connaît par exemple la housse telle que divulguée par le brevet américain N° 5,002,184, qui décrit une housse somme toute classique dont les parois, notamment supérieure et inférieure sont constituées par une couche de mousse qui constitue des moyens d'amortissement permettant de protéger l'appareil portable. Mais ladite housse na permet pas un amortissement approprié aux type de chocs, et présente donc à cet égard des inconvénients. Par ailleurs, pour utiliser l'ordinateur, l'utilisateur doit le sortir de sa housse.

La présente invention a pour objectif de résoudre les inconvénients précités à l'aide de moyens simples, fiables et faciles à mettre en oeuvre. Elle a pour objectif de proposer aux utilisateurs d'ordinateur portable une housse destinée à protéger celui-ci lors des chocs pouvant survenir pendant son utilisation ou son transport, ladite housse comportant des perfectionnements destinés à renforcer la protection et à faciliter l'usage du micro-ordinateur portable dans sa housse. Par ailleurs la housse de l'invention permet l'utilisation de l'ordinateur, sans avoir à le sortir de sa housse, puisqu'il est prévus des moyens de liaison entre le contenu et le contenant.

Ainsi selon sa caractéristique principale, la housse pour ordinateur portable est constituée d'une partie inférieure et d'une partie supérieure, et est caractérisée en ce que la partie inférieure et/ou la partie supérieure possèdent des moyens d'amortissement destinés à amortir les chocs pour l'ordinateur situé dans la housse.

Selon une caractéristique complémentaire de la housse pour ordinateur portable, les moyens d'amortissement sont constitués par un ensemble d'organes d'amortissement disposés sur la (les) faces(s) interne(s) des parties inférieure et/ou supérieure pour former des zones d'amortissement.

Selon le mode de réalisation préféré de la housse pour ordinateur portable, les organes d'amortissement présentent une capacité d'amortissement variable.

Selon une autre caractéristique de la housse pour ordinateur portable, celle-ci est caractérisée en ce que les organes d'amortissement sont formés par des tétons et en ce que les zones d'amortissement sont situés aux quatre coins de la (des) face(s) interne(s) des parties supérieure et/ou inférieure.

Selon une caractéristique complémentaire de la housse pour ordinateur portable, celle-ci est caractérisée en ce que des moyens d'amortissement sont situés sur la partie inférieure destinée à recevoir le clavier de l'ordinateur, ils comprennent des moyens de maintien et/ou de fixation disposés dans la zone centrale de ladite partie inférieure et qui sont destinés à permettre, lors d'un choc, les oscillations et/ou le pivotement du clavier dans la housse autour de la zone d'appui et/ou de fixation centrale.

Selon le mode de réalisation préféré de la housse pour ordinateur portable, la zone d'appui et/ou de fixation s'étend de la face interne de la partie inférieure à l'aplomb du centre de gravité de l'ordinateur portable pour être surélevée par rapport à ladite face interne, ladite zone portant sur sa face supérieure des moyens de fixation pour fixer l'ordinateur portable.

Selon une autre caractéristique de la housse pour ordinateur portable, celle-ci est caractérisée en ce qu'elle comporte une pièce intermédiaire disposée entre la partie supérieure et l'écran de l'ordinateur portable pour les solidariser, ladite pièce intermédiaire comprenant des moyens de sollicitation élastique destinés à entrouvrir la housse lors du déverrouillage des moyens de fermeture de la housse.

Selon une caractéristique complémentaire de la housse pour ordinateur portable, les moyens d'amortissement sont en partie constitués par deux rebords périphériques qui s'étendent respectivement depuis la partie supérieure et inférieure et qui se recouvrent transversalement pour former une double paroi au moins en partie sur le bord avant et les bords latéraux de la tranche de la housse.

Selon une variante d'exécution de la housse pour ordinateur portable, la partie supérieure et/ou la partie inférieure présentent une portion de paroi qui s'étend latéralement sensiblement dans le plan de leur face interne au delà du rebord périphérique.

Selon une autre caractéristique de la housse pour ordinateur portable, celle-ci est caractérisée en ce que la partie supérieure et la partie inférieure sont articulées ensemble le long de l'arête supérieure de la paroi arrière qui s'étend depuis la face interne de la partie inférieure.

Selon une caractéristique complémentaire de la housse pour ordinateur portable, elle comporte une poche externe complémentaire pour contenir les accessoires de l'ordinateur, munie de moyens de fixation amovibles destinée à pouvoir être attachée à la partie supérieure ou inférieure de la housse.

Selon une variante d'exécution de la housse pour ordinateur portable, la partie inférieure comporte un rebord périphérique qui présente des lumières ou des fentes destinées a permettre l'accès à différents organes de l'ordinateur sans sortir celui-ci de la housse.

Selon une autre caractéristique de la housse pour ordinateur portable, celle-ci est caractérisée en ce qu'elle comporte une poignée (18) qui s'étend depuis la partie supérieure (3) le long du bord avant de la housse (1).

D'autres caractéristiques et avantages de l'invention se dégageront de la description qui va suivre en regard des dessins annexés qui ne sont donnés qu'à titre d'exemples non limitatifs.

Les figures 1 à 11 illustrent le mode de réalisation préféré de la housse pour ordinateur portable de l'invention.

La figure 1 illustre en perspective la housse et son ordinateur portable.

La figure 2 représente en perspective la housse en position ouverte.

La figure 3 représente en perspective la housse en position fermée.

La figure 4 illustre en perspective de trois quart arrière la housse en position semi ouverte.

La figure 5 montre en vue de dessus la partie inférieure de la housse de l'ordinateur portable.

La figure 6 illustre en vue de face la partie supérieure de la housse.

La figure 7 représente en coupe transversale la housse et son ordinateur en position fermée.

La figure 8 illustre en coupe transversale la housse en position entrouverte et son ordinateur portable.

Les figures 9a, 9b et 9c illustrent en perspective des variantes d'exécution de la pièce intermédiaire de liaison.

La figure 10 représente schématiquement le mouvement de pivotement de l'ordinateur dans sa housse lors d'un choc.

La figure 11 illustre en perspective la housse et son sac complémentaire amovible.

Selon l'invention, la housse pour ordinateur portable portant la référence générale (1) est du type constituée d'une partie inférieure principale (2) articulée avec une partie supérieure (3) appelée également rabat, les deux parties étant articulées entre une position fermée (A) et une position ouverte (B). Ces deux parties (2, 3) forment ensemble une enceinte fermée à l'intérieur de laquelle l'utilisateur dispose son ordinateur portable (4) pour le transporter ainsi que pour l'utiliser ; la housse (1) permettant, de par sa conception, d'utiliser l'ordinateur portable sans être obligé de sortir celui-ci.

Selon l'invention, la partie inférieure (2) et/ou la partie supérieure (3) possède(nt) des moyens d'amortissement (MA) destinés à amortir les chocs pour l'ordinateur (4) situé dans la housse (1). Il va de soi, comme le montre le mode de réalisation préféré de la housse (1) illustré, que les deux parties (2, 3) présentent chacune des moyens d'amortissement destinés à coopérer pour protéger efficacement l'ordinateur (4).

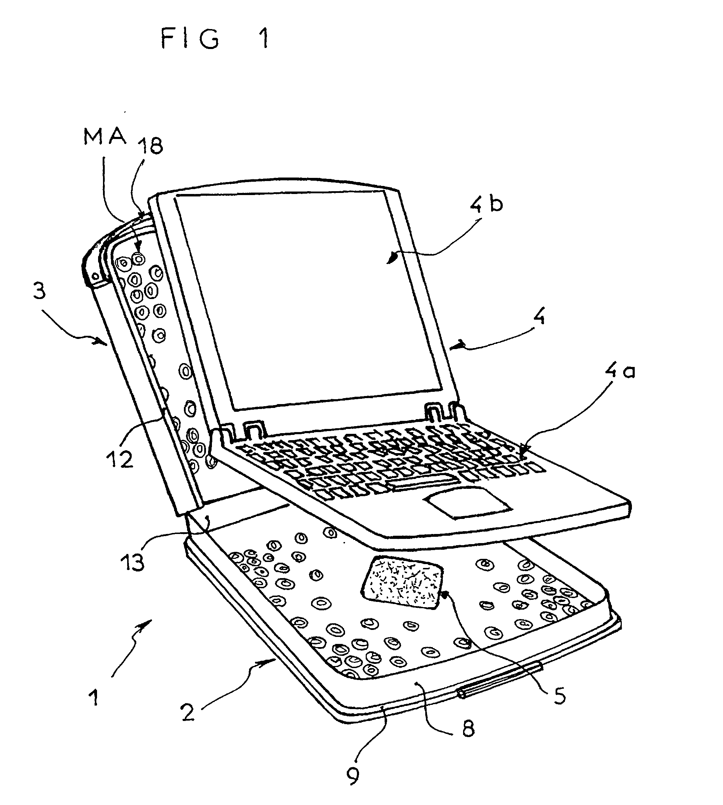

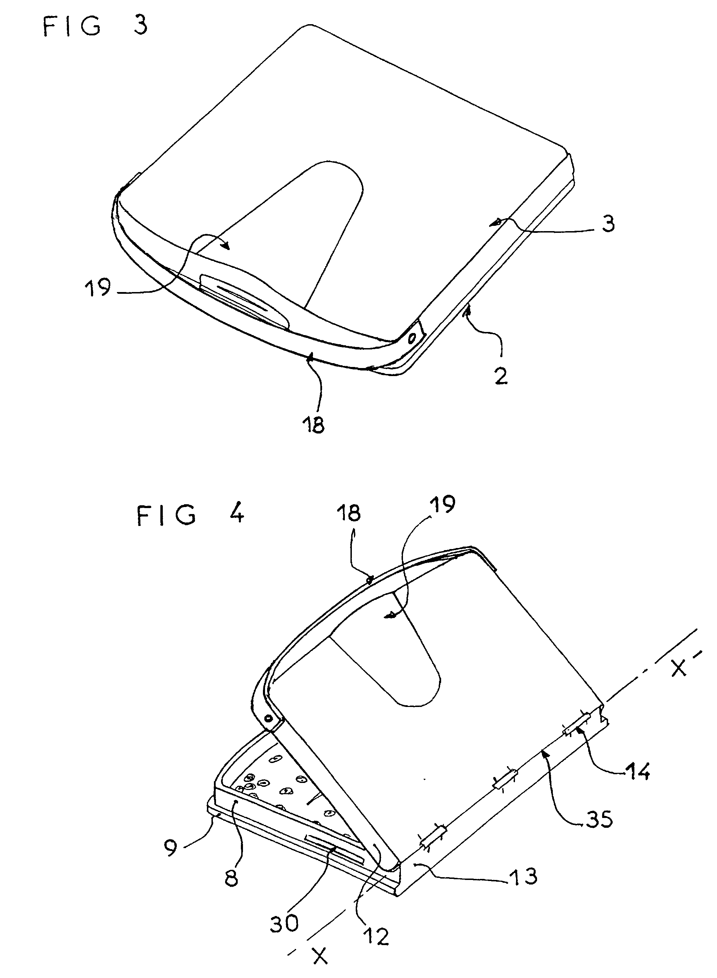

Selon le mode de réalisation préféré de la housse (1) illustrée figures 1 à 10, les moyens d'amortissement (MA) sont disposés sur les parties supérieure et inférieure (2, 3) et sont en partie formés par les faces internes (2a, 3a) desdites parties, ces faces internes étant réalisées dans un matériau d'amortissement tel qu'une mousse ou autre. Notons que les parties inférieure et supérieure (2, 3) sont avantageusement réalisées dans une même matière et forment une même pièce monobloc réalisée dans une mousse tel qu'une mousse polyuréthanne, par exemple, qui favorise l'amortissement. Toutefois, il va de soi que l'on ne sortirait pas du champ de protection de l'invention en réalisant des pièces d'amortissement indépendantes réalisées en mousse et disposées sur les parties inférieure (2) et supérieure (3) le long de leurs faces internes (2a, 3a) respectives de manière amovible ou non. De même, les parties supérieure et inférieure pourraient être réalisées indépendamment et être assemblées à l'aide de charnières comme le montre la variante d'exécution illustrée figure 4.

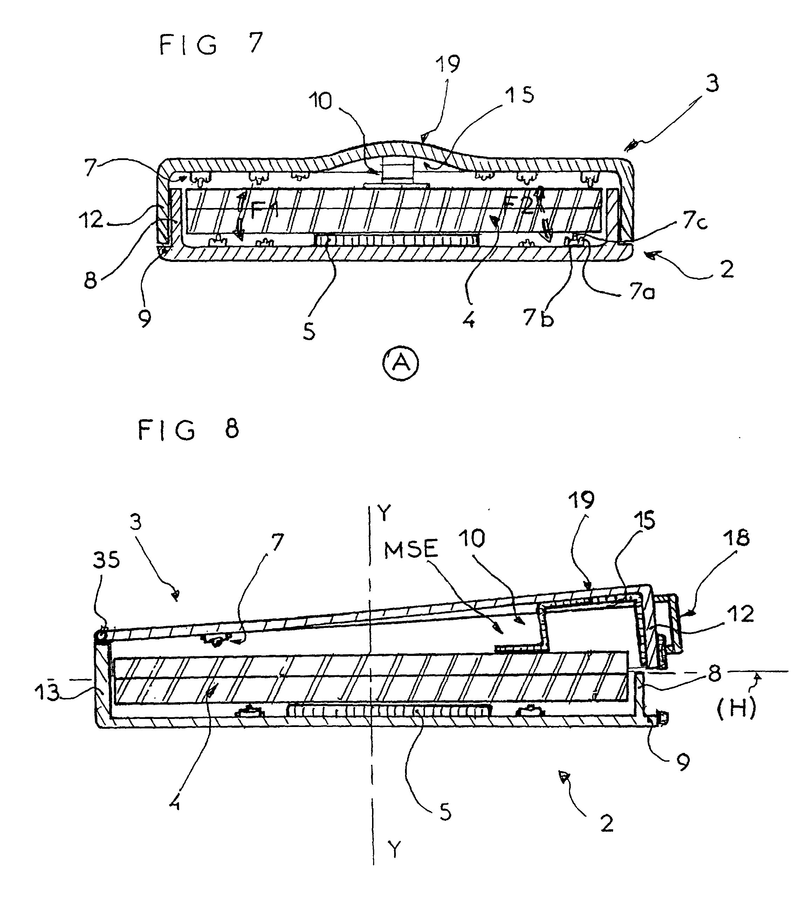

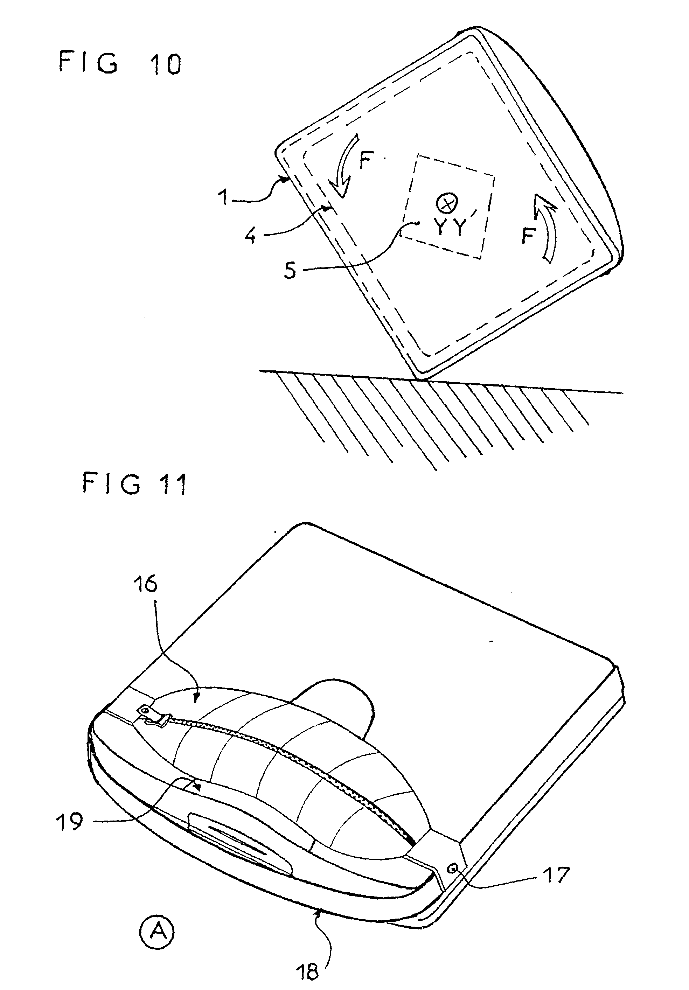

Selon le mode de réalisation préféré de l'invention, la partie inférieure (2) destinée à recevoir le clavier (4a) de l'ordinateur (4) comprend des moyens d'amortissement partiellement formés par des moyens de fixation et de maintien disposés dans la zone centrale (5) de ladite partie inférieure, lesdits moyens de fixation étant destinés à permettre lors d'un choc les oscillations ou le pivotement du clavier (4a) dans l'enceinte de la housse (1) autour d'une zone d'appui centrale (5), comme le montrent les figures 7 et 10, Ces moyens de fixation et d'appui (5) permettent avantageusement d'amortir le pivotement (F) de l'ordinateur portable dans le plan horizontal (H) de la housse (4) autour d'un axe sensiblement vertical (YY'), comme le montre schématiquement la figure 10 ; ceci permet d'amortir les chocs reçus sur la tranche de la housse en autorisant la rotation de l'ordinateur dans le plan (H) tout en la contrôlant. Ils permettent également de maintenir l'ordinateur avec l'aide des organes d'amortissement (7) décrits ci-après dans le plan (H), de manière légèrement surélevée par rapport à la surface de la face interne (2a) ; et ce de manière à permettre également' l'amortissement avec l'aide des dits organes, des oscillations de l'ordinateur (4) selon (F1) et (F2) dans un plan transversal.

Ces moyens de fixation peuvent être de tous types tels qu'une attache rapide de type Velcro (11) (Marque déposée), par exemple, ou autres. Il va de soi que la localisation de la zone d'appui et de fixation (5) autour de laquelle pivote l'ordinateur lors des chocs pourrait être différente et être décalée en fonction des caractéristiques techniques de l'ordinateur à protéger comme, par exemple, en fonction de la répartition de son poids ou des zones sensibles à protéger ou en fonction d'autres paramètres, sans pour autant sortir du champ de protection de l'invention. De même, la fixation de l'ordinateur qui permet sa rotation dans le plan horizontal (H) et l'appui qui permet ses oscillations transversales pourraient être obtenus par deux pièces distinctes et non plus par une saillie centrale unique tel qu'illustré.

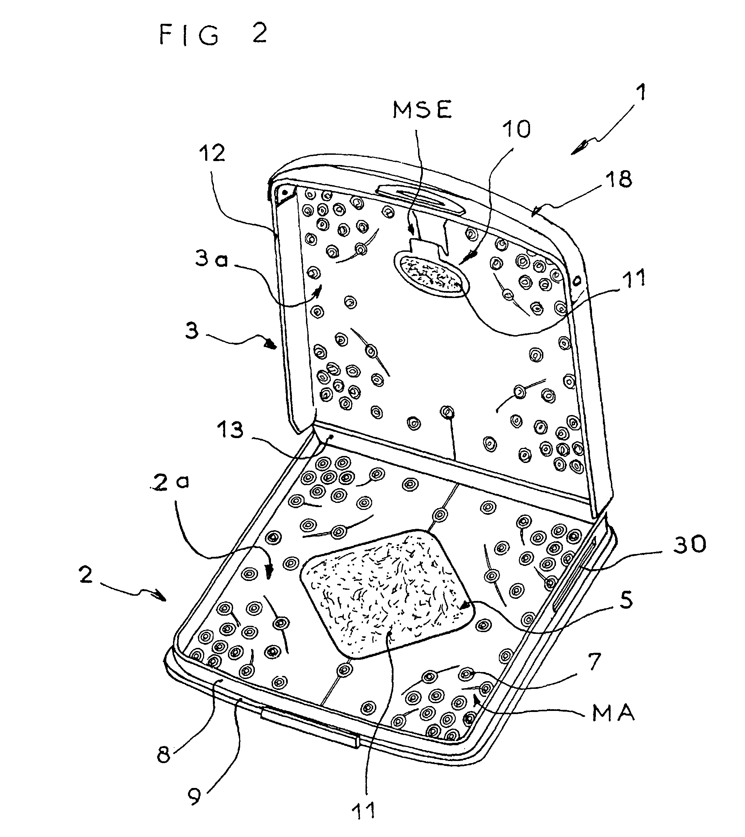

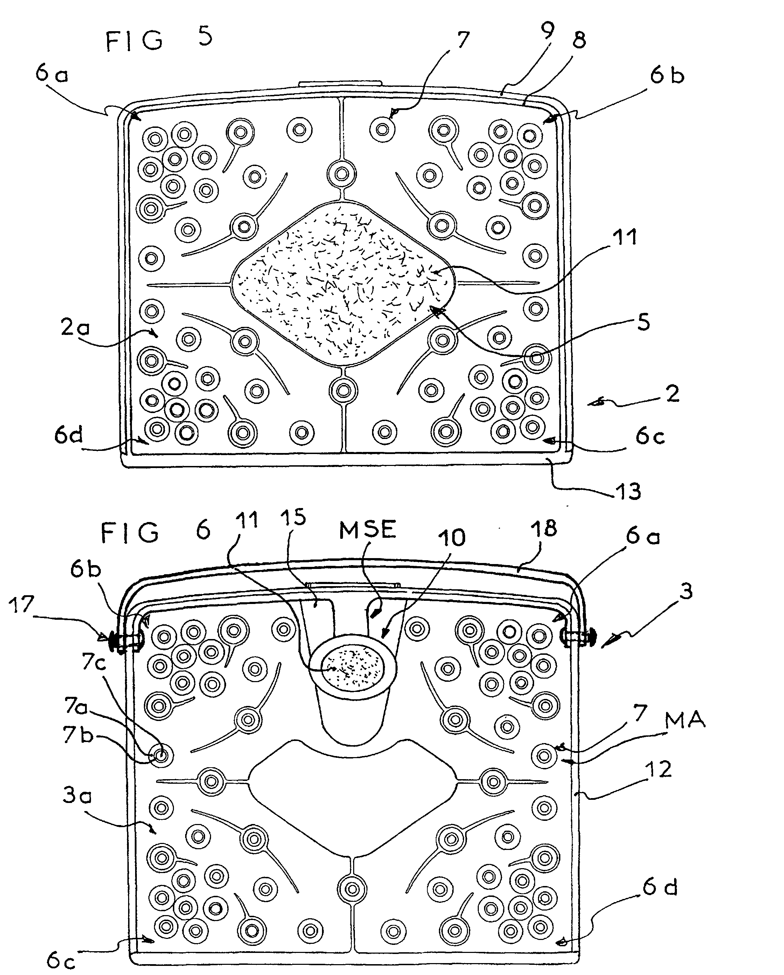

La zone d'appui centrale (5) est avantageusement surélevée d'une hauteur (h) par rapport à la surface de la face interne (2a) depuis laquelle elle s'étend pour permettre les oscillations de l'ordinateur (4) selon (F1) et (F2), comme le montre la figure 7. Il va de soi que la zone centrale (5) est avantageusement disposée à l'aplomb du centre de gravité de l'ordinateur (4). Elle présente une forme et des dimensions qui peuvent varier en fonction de la housse et de l'ordinateur à protéger ; elle peut ainsi se présenter sous la forme d'un profil transversal en losange qui s'étend en saillie de la paroi interne (2a) et qui porte sur sa face supérieure les moyens de fixation (11), comme le montrent les figures 2 et 5.

Selon le mode de réalisation préféré de la housse, les moyens d'amortissement (MA) sont également formés en partie par des zones d'amortissement (6a, 6b, 6c, 6d) disposées sensiblement aux quatre coins des faces internes (2a, 3a) des parties inférieure (2) et supérieure (3), comme le montrent les figures 5, 6 et 7, lesdites zones comportant des organes d'amortissement (7) dont la capacité d'amortissement est variable. Il va de soi que ces moyens d'amortissement (7) pourraient être utilisés indépendamment du dispositif de fixation et de pivotement central (5) précédemment décrit. Toutefois, la coopération entre cette zone de fixation centrale (5) et les zones d'amortissement (6a, 6b, 6c, 6d) permet d'augmenter l'efficacité de l'amortissement et donc de la protection obtenue.

Les organes d'amortissement (7) sont avantageusement constitués par des tétons d'amortissement dont la capacité d'amortissement dépend de l'écrasement subi, de manière à augmenter lorsque la sollicitation par l'ordinateur (4) sur le téton augmente. Pour ce faire, l'organe d'amortissement (7) comporte, par exemple, un profil dont les dimensions augmentent du sommet vers la base, lesdites dimensions pouvant augmenter de manière continue comme pour des tétons coniques ou augmenter de manière discontinue, comme dans le mode de réalisation illustré de la housse (1). Il va de soi que l'on pourrait faire varier la capacité d'amortissement des organes (7) en faisant, par exemple, varier la densité de la matière les constituant le long de leur hauteur tout en conservant leur dimension.

Selon le mode de réalisation préféré illustré figure 2, ces organes (7) sont formés par des tétons dont les dimensions telles que le diamètre ou la largeur varient selon leur hauteur de manière à présenter transversalement un profil en escalier à plusieurs niveaux, comme le montre la figure 7. De plus, la hauteur des tétons peut varier en fonction de leur localisation dans la zone d'amortissement (6a, 6b, 6c, 6d), comme le montre la figure 7, où la hauteur totale des tétons diminue à l'approche de la zone centrale, par exemple.

Ces tétons d'amortissement (7) sont, par exemple, formés d'une succession de portions cylindriques (7a, 7b, 7c) dont le diamètre diminue de la face interne (2a, 3a) de la housse (1) vers l'ordinateur (4) et qui sont destinées à se comprimer successivement en fonction de la violence du choc, faisant ainsi varier la capacité d'amortissement globale du téton en fonction de son écrasement.

La répartition des tétons d'amortissement (7) est avantageusement étudiée pour que les quatre zones proches des coins de la housse (1) comportent un grand nombre de tétons, tandis que ceux-ci sont moins nombreux à l'approche de la zone d'appui centrale (5).

Selon l'invention, les moyens d'amortissement peuvent également être formés en partie par les rebords périphériques (8, 12) de la partie inférieure (2) et de la partie supérieure (3) qui se recouvrent et qui, par leur coopération, permettent d'encapsuler l'ordinateur (4) à l'intérieur de l'enceinte de la housse (1). Selon le mode de réalisation illustré figure 2, la partie supérieure (3) de la housse comprend un rebord périphérique externe (12) qui s'étend à l'extrémité de la paroi qui la forme, tandis que la partie inférieure (2) comporte un rebord périphérique interne (8) qui s'étend depuis la face intérieure (2a) de ladite partie légèrement en retrait pour laisser dépasser une portion de paroi (9) qui s'étend au-delà dudit rebord (8).

Ces rebords périphériques (8, 12) se recouvrent transversalement pour former une double paroi périphérique au moins sur le bord avant et sur les bords latéraux de la housse. On peut remarquer que la partie inférieure (2) comporte une portion de paroi (9) qui s'étend au-delà du rebord périphérique interne (8) et qui forme également un bord d'amortissement (9) destiné à protéger l'ordinateur portable en cas de choc latéral sur la tranche de la housse (1). Il va de soi que la forme et les dimensions du bord d'amortissement (9) qui s'étend au delà du rebord périphérique (8) dans un plan sensiblement horizontal pourraient être différentes pour présenter un bord arrondi ou autre sans pour autant sortir du champs de protection de l'invention. De même, ce bord d'amortissement pourrait être disposé sur la partie supérieure (3).

On peut noter que selon un mode de réalisation non représenté, le rebord périphérique de la partie inférieure comprend sur ses bords latéraux des ouvertures ou des fentes (30) destinées à permettre l'accès à des boutons, des moyens de connexion ou des périphériques (tiroir de CD-ROM ou de disquette) de l'ordinateur. De cette façon, l'ordinateur (4) peut être utilisé par l'utilisateur en le gardant dans sa housse (1) pour le protéger des chocs pendant son utilisation.

Il va de soi que la configuration interne-externe des rebords périphériques (8, 12) des parties supérieure et inférieure pourrait être inversée sans pour autant sortir du champ de protection de l'invention. La housse (1) présente sur sa tranche, comme le montre la figure 7, une double paroi latérale et une double paroi avant. Cependant, elle ne comporte qu'une portion de paroi arrière (13) qui s'étend à l'arrière de la partie inférieure (2) et dont l'épaisseur peut être supérieure à la largeur des rebords périphériques (8, 12) et peut par exemple correspondre à deux fois leur épaisseur environ.

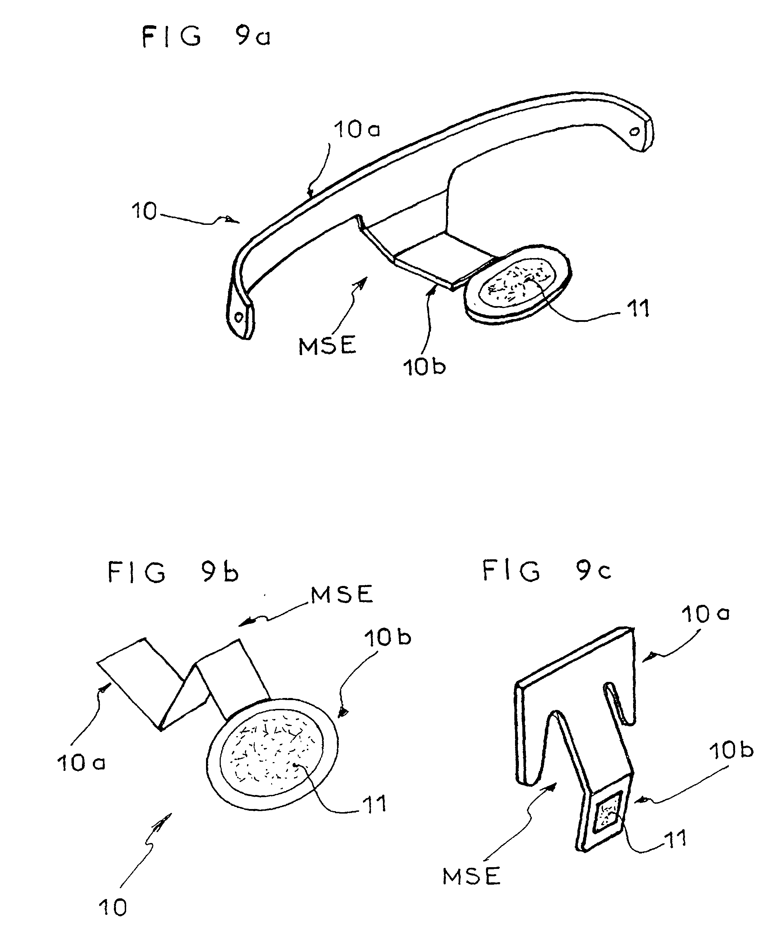

Selon le mode de réalisation préféré de la housse (1) de l'invention, la partie supérieure (3) est articulée sur la paroi arrière (13) de la partie inférieure (2) le long d'un axe (XX') correspondant à l'arête supérieure (35) de ladite paroi arrière, comme le montrent les figures 4 et 8. Les charnières (14) entre les parties supérieure et inférieure (2, 3) peuvent être constituées par des zones de moindre épaisseur comme lorsque la housse est réalisée en une seule pièce monobloc ou peuvent être des charnières classiques de type connu en soi lorsque la partie supérieure et la partie inférieure sont constituées de deux pièces indépendantes comme le montre le mode de réalisation de la figure 4. Par ailleurs, on peut noter que la housse (1) comporte des moyens de fermeture et de verrouillage tels qu'un fermoir disposé sur les rebords périphériques avant.

Par ailleurs, selon l'invention, l'écran (4b) de l'ordinateur (4) est relié à la partie supérieure (3) de la housse (1) et plus précisément à sa face interne par l'intermédiaire d'une pièce de liaison (10), comme le montrent les figures 2 et 8. La pièce intermédiaire (10) comprend des moyens de sollicitation élastique (MSE) obtenus, par exemple, par la déformation propre de ladite pièce lorsque la housse est en position fermée. Ces moyens de sollicitation élastique permettent, lors du déverrouillage des moyens de fermeture de la housse, de solliciter la partie supérieure (3) pour qu'elle s'écarte de la partie inférieure (2) ainsi que de l'ordinateur (4). Ces moyens de sollicitations (MSE) permettent de ce fait à la housse de s'entrouvrir automatiquement, tel qu'illustré figure 8, pour permettre à l'utilisateur d'avoir un accès aisé aux moyens de verrouillage et de déverrouillage liant le clavier (4a) de l'ordinateur (4) à son écran (4b).

Selon le mode de réalisation préféré de la pièce de liaison (10) celle-ci est réalisée en matière plastique pour permettre d'obtenir les moyens de sollicitation élastique (MSE) par la déformation propre de ladite pièce de liaison lors de la fermeture de la housse. Elle possède, comme le montre la figure 9a, un corps (10a) solidaire du rabat (3) et une patte (10b) reliée à la face arrière de l'écran (4b) par l'intermédiaire de moyens de fixation (11). Sa configuration permet avantageusement l'ouverture de la housse, d'une part, et le mouvement relatif entre l'écran (4b) et le rabat (3) grâce à la flexibilité de la patte (10b), d'autre part. Lors du pivotement de la partie supérieure (3) et de l'écran (4b), la pièce de liaison (10) se déplie grâce au mouvement relatif de l'écran et de ladite partie et permet ainsi lorsqu'elle est dépliée au maximum de servir de butée et de provoquer l'arrêt de leur pivotement grâce à la triangulation entre les axes de pivotement et la pièce. Il va de soi que la pièce de liaison intermédiaire pourrait avoir une forme différente, comme le montrent les variantes d'exécution illustrée figure 9b et 9c, sans pour autant sortir du champ de protection de l'invention.

On peut noter que la patte (10b) de la pièce intermédiaire (10) est située dans une partie évidée (15) appelée décaissement de la face interne (3a) de la partie supérieure (3), ledit décaissement formant sur la face externe (3b) de ladite partie une zone centrale bombée (19), tel qu'illustré figure 3.

Selon le mode de réalisation préféré de la housse (1) pour ordinateur portable (4), elle présente une poche externe complémentaire (16) destinée à pouvoir être disposée sur la face externe de la partie supérieure (3). Cette poche complémentaire (16) présente des moyens de fixation amovibles destinés à coopérer avec deux tétons de fixation latéraux (17) de la partie supérieure. Elle est avantageusement destinée à contenir les accessoires de l'ordinateur (souris, modem, câbles et autres). Elle présente avantageusement une forme bombée sur sa paroi inférieure pour épouser la zone centrale bombée (19) de la partie supérieure.

On peut également noter que la housse (1) présente une poignée (18) solidaire de la partie supérieure (3) et s'étendant sur le bord avant de la housse (1) et destinée au transport de l'ordinateur. Ainsi, lorsque la housse (1) est en position ouverte, le bord périphérique interne (8) de la partie inférieure (2) est libre et ne présente aucun accessoire qui empêcherait de prévoir des lumières ou des fentes (30) dans ledit bord aux endroits adaptés à l'ordinateur. Elle pourrait également présenter sur la face externe de sa partie inférieure des moyens de préhension tels qu'un passant en tissu élastique destiné à permettre le passage du bras de l'utilisateur.

Par ailleurs, on peut noter que le corps (10a) de la pièce de liaison (10) vient se positionner le long de la partie avant du bord périphérique (12) de la partie supérieure (3) et peut être fixé au dit bord grâce aux tétons de fixation (17) qui peuvent également permettre la fixation de la poignée (18) qui s'étend de l'autre coté du dit bord (12).

Bien entendu, l'invention n'est pas limitée aux modes de réalisation décrits et représentés à titre d'exemples, mais elle comprend aussi tous les équivalents techniques ainsi que leurs combinaisons.

## Revendications

1. Housse (1) pour ordinateur portable (4) constituée d'une partie inférieure (2) et d'une partie supérieure (3), **caractérisée en ce que** la partie inférieure (2) et/ou la partie supérieure (3) possèdent des moyens d'amortissement (MA) destinés à amortir les chocs pour l'ordinateur (4) situé dans la housse (1) qui sont constitués par un ensemble d'organes d'amortissement (7) disposés sur la (les) faces(s) interne(s) (2a, 3a) des parties inférieure et/ou supérieure (2, 3) pour former des zones d'amortissement (6a, 6b, 6c, 6d), **caractérisée en ce que** les organes d'amortissement (7) sont formés par des tétons présentant une capacité d'amortissement variable, lesdits tétons (7) étant formés d'une succession de portions cylindriques (7a, 7b, 7c) dont le diamètre diminue de la face interne (2a, 3a) de la housse (1) vers l'ordinateur (4) et qui sont destinées à se comprimer successivement en fonction de la violence du choc, faisant ainsi varier la capacité d'amortissement globale du téton en fonction de son écrasement.

2. Housse (1) pour ordinateur portable (4) selon la revendication 1, **caractérisée en ce que** les zones d'amortissement (6a, 6b, 6c, 6d) sont situés aux quatre coins de la (des) face(s) interne(s) (2a, 3a) des parties supérieure et/ou inférieure (2, 3).

3. Housse (1) pour ordinateur portable (4) selon l'une quelconque des revendications précédentes, **caractérisée en ce que** des moyens d'amortissement (MA) sont situés sur la partie inférieure (2) destinée à recevoir le clavier (4a) de l'ordinateur (4), ils comprennent des moyens de maintien et/ou de fixation disposés dans la zone centrale (5) de ladite partie inférieure (2) et qui sont destinés à permettre, lors d'un choc, les oscillations (F1, F2) et/ou le pivotement (F) du clavier (4a) dans la housse (1) autour de la zone d'appui et/ou de fixation centrale (5).

4. Housse (1) pour ordinateur portable (4) selon la revendication 3, **caractérisée en ce que** la zone d'appui et/ou de fixation (5) s'étend de la face interne (2a) de la partie inférieure (2) à l'aplomb du centre de gravité de l'ordinateur portable (4) pour être surélevée par rapport à ladite face interne, ladite zone (5) portant sur sa face supérieure des moyens de fixation (11) pour fixer l'ordinateur portable.

5. Housse (1) pour ordinateur portable (4) selon l'une quelconque des revendications précédentes, **caractérisée en ce qu'**elle comporte une pièce intermédiaire (10) disposée entre la partie supérieure (3) et l'écran (4b) de l'ordinateur portable (4) pour les solidariser, ladite pièce intermédiaire (10) comprenant des moyens de sollicitation élastique (MSE) destinés à entrouvrir la housse (1) lors du déverrouillage des moyens de fermeture de la housse.

6. Housse (1) pour ordinateur portable (4) selon l'une quelconque des revendications précédentes, **caractérisée en ce que** les moyens d'amortissement (MA) sont en partie constitués par deux rebords périphériques (8, 12) qui s'étendent respectivement depuis la partie supérieure (3) et inférieure (2) et qui se recouvrent transversalement pour former une double paroi au moins en partie sur le bord avant et les bords latéraux de la tranche de la housse (1).

7. Housse (1) pour ordinateur portable (4) selon la revendication 6, **caractérisée en ce que** la partie supérieure (3) et/ou la partie inférieure (2) présentent une portion de paroi (9) qui s'étend latéralement sensiblement dans le plan de leur face interne (2a, 3a) au delà du rebord périphérique (8, 12).

8. Housse (1) pour ordinateur portable (4) selon l'une quelconque des revendications précédentes, **caractérisée en ce que** la partie supérieure (3) et la partie inférieure (2) sont articulées ensemble le long de l'arête supérieure (35) de la paroi arrière (13) qui s'étend depuis la face interne (2a) de la partie inférieure (2).

9. Housse (1) pour ordinateur portable (4) selon l'une quelconque des revendications précédentes, **caractérisée en ce qu'**elle comporte une poche externe complémentaire (16) pour contenir les accessoires de l'ordinateur, munie de moyens de fixation amovibles destinée à pouvoir être attachée à la partie supérieure ou inférieure (2, 3) de la housse.

10. Housse (1) pour ordinateur portable (4) selon l'une quelconque des revendications précédentes, **caractérisée en ce que** la partie inférieure (2) comporte un rebord périphérique (8) qui présente des lumières ou des fentes (30) destinées a permettre l'accès à différents organes de l'ordinateur (4) sans sortir celui-ci de la housse (1).

11. Housse (1) pour ordinateur portable (4) selon l'une quelconque des revendications précédentes, **caractérisée en ce qu'**elle comporte une poignée (18) qui s'étend depuis la partie supérieure (3) le long du bord avant de la housse (1).

## Patentansprüche

1. Gehäuse (1) für Notebook (4) bestehend aus einem unteren Teil (2) und einem oberen Teil (3), **dadurch gekennzeichnet, dass** der untere Teil (2) und/oder der obere Teil (3) Dämpfungsmittel (MA) aufweisen, mit denen das in dem Gehäuse (1) befindliche Notebook (4) vor Stößen geschützt wird, und die aus einem Satz Dämpfungselemente (7) bestehen, die auf der Innenseite (den Innenseiten) (2a, 3a) des unteren und/oder des oberen Teils (2, 3) zur Bildung von Dämpfungsbereichen (6a, 6b, 6c, 6d) angeordnet sind, **dadurch gekennzeichnet, dass** die Dämpfungselemente (7) durch Stifte gebildet werden, die ein veränderliches Dämpfungsvermögen aufweisen, wobei die Stifte (7) aus einer Reihe zylindrischer Abschnitte (7a, 7b, 7c) bestehen, deren Durchmesser von der Innenseite (2a, 3a) des Gehäuses (1) zum Notebook (4) hin abnimmt und die nacheinander in Abhängigkeit zur Stärke des Stoßes zusammengedrückt werden, wodurch sich das gesamte Dämpfungsvermögen des Stiftes in Abhängigkeit zu seinem zusammengedrückten Zustand verändert.

2. Gehäuse (1) für Notebook (4) nach Anspruch 1, **dadurch gekennzeichnet, dass** die Dämpfungsbereiche (6a, 6b, 6c, 6d) sich an den vier Ecken der Innenseite(n) (2a, 3a) des oberen und/oder des unteren Teils (2, 3) befinden.

3. Gehäuse (1) für Notebook (4) nach einem der vorstehenden Ansprüche, **dadurch gekennzeichnet, dass** die Dämpfungsmittel (MA) auf dem unteren, die Tastatur (4a) des Notebooks (4) aufnehmenden Teil (2) angeordnet sind, und dass sie Festhalte- und/oder Befestigungsmittel umfassen, die im mittleren Bereich (5) des unteren Teils (2) angeordnet sind und die bei einem Stoß die Schwingungen (F1, F2) und/oder die Schwenkbewegung (F) der Tastatur (4a) in dem Gehäuse (1) um den Abstütz- und/oder mittleren Befestigungsbereich (5) ermöglichen sollen.

4. Gehäuse (1) für Notebook (4) nach Anspruch 3, **dadurch gekennzeichnet, dass** der Abstütz- und/oder Befestigungsbereich (5) sich von der Innenseite (2a) des unteren Teils (2) im Lot zum Schwerpunkt des Notebooks (4) erstreckt, um im Verhältnis zur Innenseite erhöht zu sein, wobei der Bereich (5) auf seiner Oberseite Befestigungsmittel (11) zum Befestigen des Notebooks aufweist.

5. Gehäuse (1) für Notebook (4) nach einem der vorstehenden Ansprüche, **dadurch gekennzeichnet, dass** es zwischen dem oberen Teil (3) und dem Bildschirm (4b) des Notebooks (4) ein Zwischenteil (10) aufweist, mit dem das obere Teil und der Bildschirm fest verbunden werden sollen, wobei das Zwischenteil (10) Mittel zur elastischen Beanspruchung (MSE) umfasst, die beim Entriegeln der Schließmittel des Gehäuses (1) letztere leicht öffnen sollen.

6. Gehäuse (1) für Notebook (4) nach einem der vorstehenden Ansprüche, **dadurch gekennzeichnet, dass** die Dämpfungsmittel (MA) teilweise aus zwei umlaufenden Rändern (8, 12) bestehen, die sich jeweils vom oberen (3) und unteren (2) Teil erstrecken und sich in Querrichtung überdecken, um so mindestens teilweise auf dem vorderen Rand und auf den Seitenrändern der Schmalseite des Gehäuses (1) eine doppelte Wandung zu bilden.

7. Gehäuse (1) für Notebook (4) nach Anspruch 6, **dadurch gekennzeichnet, dass** der obere Teil (3) und/oder der untere Teil (2) einen Wandabschnitt (9) aufweisen, der sich seitlich im Wesentlichen in der Ebene ihrer Innenseite (2a, 3a) über den umlaufenden Rand (8, 12) hinaus erstreckt.

8. Gehäuse (1) für Notebook (4) nach einem der vorstehenden Ansprüche, **dadurch gekennzeichnet, dass** der obere Teil (3) und der untere Teil (2) entlang der sich von der Innenseite (2a) des unteren Teils (2) erstreckenden oberen Kante (35) der Hinterwand (13) gelenkverbunden sind.

9. Gehäuse (1) für Notebook (4) nach einem der vorstehenden Ansprüche, **dadurch gekennzeichnet, dass** es eine ergänzende Außentasche (16) für das Notebook-Zubehör aufweist, die mit lösbaren Befestigungsmitteln versehen ist, so dass sie an das obere oder an das untere Teil (2, 3) des Gehäuses anbringbar ist.

10. Gehäuse (1) für Notebook (4) nach einem der vorstehenden Ansprüche, **dadurch gekennzeichnet, dass** der untere Teil (2) einen umlaufenden Rand (8) aufweist, der mit Öffnungen oder Schlitzen (30) versehen ist, über welche verschiedene Teile des Notebooks (4) zugänglich gemacht werden, ohne dass dieses aus dem Gehäuse (1) genommen werden muss.

11. Gehäuse (1) für Notebook (4) nach einem der vorstehenden Ansprüche, **dadurch gekennzeichnet, dass** es einen Griff (18) aufweist, der sich vom oberen Teil (3) weg entlang des vorderen Rands des Gehäuses (1) erstreckt.

## Claims

1. Protective bag (1) for a portable computer (4) consisting of a lower part (2) and an upper part (3), **characterised in that** the lower part (2) and/or the upper part (3) have means (MA) for impact absorption which are designed to deaden impacts for the computer (4) situated in the protective bag (1) consisting of a series of impact absorption units (7) which are disposed on the inner surface(s) (2a, 3a) of the lower and/or upper parts (2, 3) in order to form impact absorption areas (6a, 6b, 6c, 6d), **characterised in that** the impact absorption units (7) are formed by studs which have a variable impact absorption capacity, the said studs (7) being formed by a succession of cylindrical portions (7a, 7b, 7c) the diameter of which decreases from the inner surface (2a, 3a) of the protective bag (1) towards the computer (4) and which are designed to be compressed in succession according to the violence of the impact, thus varying the overall impact absorption capacity of the stud according to its compression.

2. Protective bag (1) according to claim 1 for a portable computer (4), **characterised in that** the areas of impact absorption (6a, 6b, 6c, 6d) are situated at the four corners of the inner surface(s) (2a, 3a) of the upper and/or lower parts (2, 3).

3. Protective bag (1) according to either of the preceding claims for a portable computer (4), **characterised in that** means (MA) for impact absorption are situated on the lower part (2) which is designed to receive the keyboard (4a) of the computer (4), and comprise means for retention and/or securing which are disposed in the central area (5) of the said lower part (2) and, when an impact occurs, are designed to permit oscillations (F1, F2) and/or pivoting (F) of the keyboard (4a) in the protective bag (1) around the area of support and/or central securing (5).

4. Protective bag (1) according to claim 3 for a portable computer (4), **characterised in that** the area of support and/or securing (5) extends from the inner surface (2a) of the lower part (2) plumb with the centre of gravity of the portable computer (4) such as to be raised relative to the said inner surface, the said area (5) supporting on its upper surface means (11) for securing in order to secure the portable computer.

5. Protective bag (1) according to any one of the preceding claims for a portable computer (4), **characterised in that** it comprises an intermediate part (10) disposed between the upper part (3) and the screen (4b) of the portable computer (4) in order to render the part and the screen integral, the said intermediate part (10) comprising resilient stress means (MSE) which are designed to half open the protective bag (1) during unlocking of the means for closure of the protective bag.

6. Protective bag (1) according to any one of the preceding claims for a portable computer (4), **characterised in that** the means (MA) for impact absorption are partly constituted by two peripheral edges (8, 12) which extend respectively from the upper (3) and lower (2) part and overlap transversely in order to form a double wall on at least part of the front edge and the lateral edges of the face of the protective bag (1).

7. Protective bag (1) according to claim 6 for a portable computer (4), **characterised in that** the upper part (3) and/or the lower part (2) have a wall portion (9) which extends laterally substantially in the plane of their inner surface (2a, 3a) beyond the peripheral edge (8, 12).

8. Protective bag (1) according to any one of the preceding claims for a portable computer (4), **characterised in that** the upper part (3) and the lower part (2) are articulated together along the upper ridge (35) of the rear wall (13) which extends from the inner surface (2a) of the lower part (2).

9. Protective bag (1) according to any one of the preceding claims for a portable computer (4), **characterised in that** it comprises an additional outer pocket (16) to contain the accessories of the computer, which pocket is provided with detachable means for securing and is designed to be able to be attached to the upper or lower part (2, 3) of the protective bag.

10. Protective bag (1) according to any one of the preceding claims for a portable computer (4), **characterised in that** the lower part (2) comprises a peripheral edge (8) which has apertures or slots (30) which are designed to permit access to different units of the computer (4) without taking the latter out of the protective bag (1).

11. Protective bag (1) according to any one of the preceding claims for a portable computer (4), **characterised in that** it comprises a handle (18) which extends from the upper part (3) along the front edge of the protective bag (1).
